# EUROPÄISCHE PATENTANMELDUNG

(11) **EP 2 644 936 A2**
(43) Veröffentlichungstag der Anmeldung: **02.10.2013**
(21) Anmeldenummer: 13000488.0
(22) Anmeldetag: 31.01.2013
(51) Int. Cl.: F16F 15/126, F16H 55/36

(54) **Entkoppelte Riemenscheibe**

(30) Priorität: 29.03.2012 DE 102012006285
(71) Anmelder: Carl Freudenberg KG, 69469 Weinheim (DE)
(72) Erfinder: Wick, Alexander, 79423 Heitersheim (DE)

(57) **Zusammenfassung**

Entkoppelte Riemenscheibe, umfassend einen Antrieb (1) und einen Abtrieb (2), wobei zwischen dem Antrieb (1) und dem Abtrieb (2) eine Entkopplungsvorrichtung (3) zur Entkopplung von Drehschwingungen angeordnet ist, wobei die Entkopplungsvorrichtung (3) in Richtung des Drehmomentverlaufs (4) zunächst ein Federelement (5) und dann eine Freilaufkupplung (6) umfasst, die in einer funktionstechnischen Reihenschaltung angeordnet sind. Der Antrieb (1) ist durch einen Nabenring (7) gebildet, der drehfest an einer Kurbelwelle einer Verbrennungskraftmaschine montierbar ist, und der Abtrieb (2) ist durch einen Riemenscheibenkörper (8) gebildet, durch den ein Nebenaggregat der Verbrennungskraftmaschine antreibbar ist.

## Beschreibung

### Technisches Gebiet

Die Erfindung betrifft eine entkoppelte Riemenscheibe, umfassend einen Antrieb und einen Abtrieb, wobei zwischen dem Antrieb und dem Abtrieb eine Entkopplungsvorrichtung zur Entkopplung von Drehschwingungen angeordnet ist, wobei die Entkopplungsvorrichtung in Richtung des Drehmomentverlaufs zunächst ein Federelement und dann eine Freilaufkupplung umfasst, die in einer funktionstechnischen Reihenschaltung angeordnet sind.

### Stand der Technik

Eine solche entkoppelte Riemenscheibe ist aus der DE 10 2009 014203 A1 bekannt. Die vorbekannte entkoppelte Riemenscheibe gelangt in einem Antriebsstrang, insbesondere in einem eine Verbrennungskraftmaschine und ein Zusatzaggregat verbindenden Zugmitteltrieb zur Anwendung. Die Reihenfolge der Anordnung des Federelements und der Freilaufkupplung in einer funktionstechnischen Reihenschaltung kann frei gestaltet werden, wobei beispielsweise die Freilaufkupplung in Richtung des Drehmomentverlaufs vor dem Federelement angeordnet werden kann.

Bevorzugt ist es bei der entkoppelten Riemenscheibe aus dem Stand der Technik allerdings vorgesehen, dass der Drehmomentverlauf vom Antrieb über das Federelement und von dort über die Freilaufkupplung zum Abtrieb erfolgt, weil dadurch die Drehschwingungen des Antriebs durch das Federelement von der Freilaufkupplung im Wesentlichen ferngehalten werden.

Die Freilaufkupplung der vorbekannten entkoppelten Riemenscheibe kann unterschiedlich ausgeführt sein, z. B. durch eine Schlingfeder. Bevorzugt erfolgt die Einfeitung des Drehmoments über den Riemenscheibenkörper, das Federelement und die Freilaufkupplung zum Abtrieb, wobei der Abtrieb mit der Eingangswelle eines Zusatzaggregats, beispielsweise eines Klimakompressors, verbunden ist. Die vorbekannte entkoppelte Riemenscheibe kann direkt auf das Zusatzaggregat montiert und dort befestigt werden.

### Darstellung der Erfindung

Der Erfindung liegt die Aufgabe zugrunde, eine entkoppelte Riemenscheibe der vorbekannten Art derart weiterzuentwickeln, dass Antrieb und Abtrieb auch abweichend erfolgen können.

Diese Aufgabe wird erfindungsgemäß durch eine entkoppelte Riemenscheibe gemäß Patentanspruch 1 gelöst. Auf vorteilhafte Ausgestaltungen nehmen die Unteransprüche Bezug.

Zur Lösung der Aufgabe ist es vorgesehen, dass der Antrieb durch einen Nabenring gebildet ist, der drehfest an einer Kurbelwelle einer Verbrennungskraftmaschine montierbar ist und der Abtrieb durch einen Riemenscheibenkörper, durch den ein Nebenaggregat der Verbrennungskraftmaschine antreibbar ist.

Durch eine derartige Ausgestaltung kann die entkoppelte Riemenscheibe direkt auf der Kurbelwelle montiert und dort drehfest befestigt werden. Der Abtrieb auf das Nebenaggregat erfolgt dann durch einen Riemen, der außenumfangsseitig auf dem Riemenscheibenkörper montiert ist.
Von besonderem Vorteil ist die Verwendung der erfindungsgemäßen entkoppelten Riemenscheibe in Verbindung mit Hybridantrieben, zum Beispiel einer Verbrennungskraftmaschine mit zusätzlichem Elektromotor. Durch den Hybridantrieb werden zusätzlich Schwingungen im Riementrieb generiert, die wirkungsvoll reduziert, idealerweise unterdrückt werden.

Obwohl im eingangs zitierten Stand der Technik offenbart ist, dass die Entkopplungsvorrichtung zur Entkoppelung von Drehschwingungen zwischen einem Antrieb und einem Abtrieb angeordnet ist, wobei die Entkopplungsvorrichtung in Richtung des Drehmomentverlaufs zunächst ein Federelement und dann eine Freilaufkupplung umfasst, die in einer funktionstechnischen Reihenschaltung angeordnet sind, war es für den mit der Konstruktion von entkoppelten Riemenscheiben betrauten Fachmann nicht naheliegend, einen Nabenring, der drehfest an einer Kurbelwelle einer Verbrennungskraftmaschine montierbar ist, als Antrieb vorzusehen und als Abtrieb den Riemenscheibenkörper, durch den ein Nebenaggregat antreibbar ist.
Da die Kurbelwelle hochfrequente Schwingungen in die angebauten Bauteile einleitet, musste die Anordnung so gewählt werden, dass die Freilaufelemente nicht beschädigt werden oder frühzeitig ausfallen. Bei einer direkten Anbindung des Freilaufelements an die Kurbelwelle wären diese Ziele nicht zu erreichen.

Gemäß einer vorteilhaften Ausgestaltung kann es vorgesehen sein, dass die Freilaufkupplung durch einen Schlingfederfreilauf gebildet ist. Bei Bedarf kann der Schlingfederfreilauf auch mit einer Schaltkulisse ausgeführt sein.

Die Freilauffunktion mit Schlingfedern zeichnet sich dadurch aus, dass das Lösemoment und somit die Anzahl der Schaltvorgänge gesteuert werden kann. Ist das Lösemoment kleiner, erhöht sich die Anzahl der Schaltvorgänge, ist das Lösemoment demgegenüber größer, wird die Anzahl der Schaltvorgänge reduziert. Hierdurch kann die Lebensdauer und Funktion der momentengesteuerten Schaltung verbessert und dem entsprechenden erforderlichen Schaltpunkt angepasst werden.
Dadurch, dass der Freilauf nur dann schaltet, wenn die Entkoppelung tatsächlich nötig ist, kann die Anzahl der Schaltvorgänge reduziert werden, so dass die entkoppelte Riemenscheibe insgesamt gleichbleibend gute Gebrauchseigenschaften während einer langen Gebrauchsdauer aufweist.

Der Schaltvorgang des Schlingfederfreilaufs kann zu einem bestimmten variablen Zeitpunkt stattfinden.

Im Gegensatz zu konventionellen Freiläufen, die in der Herstellung aufwendig und teuer sind, z. B. dadurch, dass Gegenlaufflächen eng toleriert und gehärtet sein müssen, ist die Verwendung eines Schlingfederfreilaufs einfacher, kostengünstiger und für die Verwendung in einer entkoppelten Riemenscheibe genauso wirksam. Außerdem haben Schlingfederfreiläufe den Vorteil, dass sie, im Gegensatz zu herkömmlichen Freiläufen mit Klemmkörpem harmonischer einkuppeln.

Der Schlingfederfreilauf kann das Federelement mit radialem Abstand umschließen, wobei in dem durch den Abstand gebildeten Spalt eine innere Stützhülse angeordnet ist. Die innere Stützhülse bildet zusammen mit dem Federelement bevorzugt ein vulkanisiertes Gummi-Metall-Teil, wobei das Federelement radial innenseitig z. B. entsprechend mit dem Nabenring ausgebildet sein kann.

Die innere Stützhülse bildet eine der Laufflächen für den Schlingfederfreilauf.

Das Federelement kann aus einem elastomeren Werkstoff bestehen. Derartige Werkstoffe für Federelemente sind in unterschiedlichen Spezifikationen allgemein bekannt, auch für die Verwendung in entkoppelten Riemenscheiben.

Eine bevorzugt stoffschlüssige Verbindung zwischen dem Federelement und der inneren Stützhülse bewirkt einen einfachen teilearmen und damit kostengünstigen Aufbau der entkoppelten Riemenscheibe.

Der Riemenscheibenkörper kann C-förmig in axialer Richtung offen ausgebildet sein, mit einem radial inneren und einem radial äußeren Axialvorsprung, die stirnseitig einerseits durch einen Radialvorsprung miteinander verbunden sind. Eine solche Ausgestaltung eines Riemenscheibenkörpers ist von Vorteil, wenn die Abmessungen des Einbauraums, in dem die Riemenscheibe zur Anwendung gelangen soll, in axialer Richtung begrenzt ist. Durch die C-förmige Gestalt des Riemenscheibenkörpers besteht die Möglichkeit, innerhalb des Spalts zwischen dem radial inneren und dem radial äußeren Axialvorsprung z. B. den Führungsflansch eines Schwungsrings anzuordnen, wie später noch ausgeführt werden wird. Die Riemenscheibe baut dadurch in axialer Richtung kompakt.

Der Schlingfederfreilauf kann axial beiderseits durch jeweils einen Dichtring abgedichtet sein, wobei die Dichtringe radial zwischen der inneren Stützhülse und dem inneren Axialvorsprung angeordnet sind. Schlingfederfreiläufe müssen einerseits gefettet werden, um einwandfrei funktionieren zu können. Andererseits muss sichergestellt werden, dass das Fett zur Schmierung des Schlingfederfreilaufs während der bestimmungsgemäßen Verwendung der Riemenscheibe zuverlässig im Einbauraum des Schlingfederfreilaufs gehalten wird und keinesfalls in die Umgebung, insbesondere nicht auf den Riemenscheibenkörper und den über den Riemenscheibenkörper geführten Riemen, gelangt.

Die Dichtringe können bevorzugt als Radialwellendichtringe ausgebildet sein.

Die innere Stützhülse kann stirnseitig einerseits einen sich radial nach außen erstreckenden Stützbund aufweisen, der den Radialvorsprung anliegend berührt. Der Stützbund bildet dadurch einen Axialanschlag für den Riemenscheibenkörper. Der Riemenscheibenkörper ist, bezogen auf die innere Stützhülse, dadurch in radialer und axialer Richtung geführt. Unerwünschte Taumelbewegungen sind dadurch ausgeschlossen.

Der Radialvorsprung kann den Stützbund mittels eines Axialgleitlagers anliegend berühren. Gleitlager bauen, im Vergleich zu Wälzlagern, üblicherweise deutlich kleiner, so dass die erfindungsgemäße Riemenscheibe insgesamt kompakte Abmessung sowohl in radialer als auch in axialer Richtung aufweist.

In radialer Richtung zwischen dem inneren und dem äußeren Axialvorsprung kann ein Führungsflansch angeordnet sein, der mittels eines Federkörpers mit einem Schwungring verbunden ist. In Abhängigkeit von den jeweiligen Gegebenheiten des Anwendungsfalles können verschiedene Elemente zur Schwingungsisolation und zur Schwingungsdämpfung Verwendung finden, einzelnen oder in Kombination miteinander.

Bevorzugt besteht der Federkörper aus einem elastomeren Werkstoff.
Der Führungsflansch, der Federkörper und der Schwungring können bevorzugt als Gummi-Metall-Teil ausgebildet sein, wobei der Federkörper durch Vulkanisation bevorzugt mit dem Führungsflansch und dem Schwungring verbunden ist. Der Führungsflansch, der Federkörper und der Schwungring bilden eine vormontierbare Einheit.

Der Führungsflansch kann mittels eines Lagers in radialer und/oder axialer Richtung an einem der Axialvorsprünge und/oder dem Radialvorsprung abgestützt sein. Dadurch werden Unwuchten und Taumelbewegungen des Schwungrings bezogen auf den Riemenscheibenkörper vermieden.

Um eine möglichst exakte Führung des Schwungrings am Riemenscheibenkörper zu erreichen, kann es vorgesehen sein, dass das Lager ein im Wesentlichen h-förrniges Gleitlager ist, wobei das Gleitlager mittels einer Elastomerspur am Innenumfang des äußeren Axialvorsprung festgelegt ist und den Radialvorsprung unmittelbar anliegend berührt. Durch die Elastomerspur, die im Vergleich zum Federelement und zum Federkörper nur eine sehr geringe radiale Dicke aufweist, werden die akustischen Eigenschaften der Riemenscheibe verbessert, insbesondere Dröhngeräusche während der bestimmungsgemäßen Verwendung der Riemenscheibe werden auf ein Minimum reduziert.

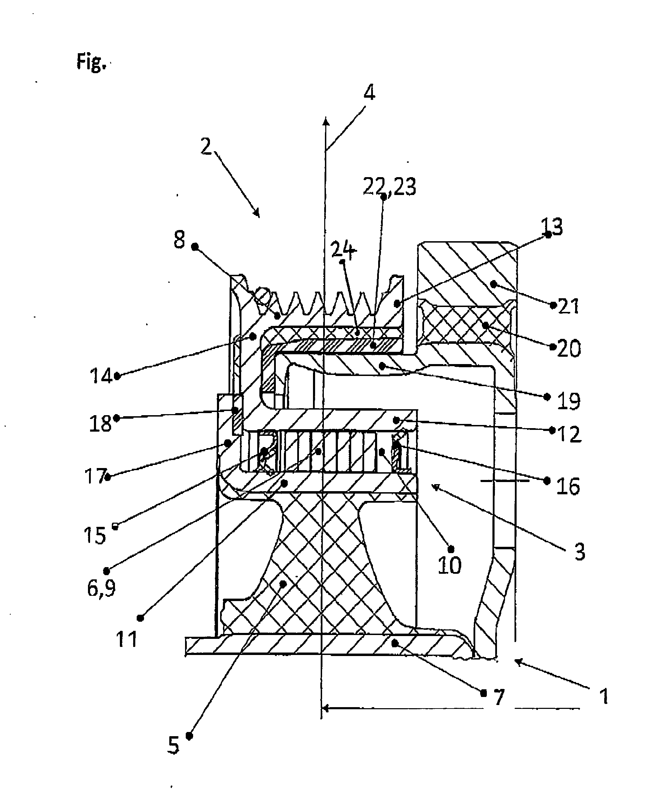

### Kurzbeschreibung der Zeichnung

Ein Ausführungsbeispiel der erfindungsgemäßen Riemenscheibe wird nachfolgend anhand der Figur näher erläutert.

In der Figur ist ein Ausführungsbeispiel einer entkoppelten Riemenscheibe in schematischer Darstellung gezeigt.

### Ausführung der Erfindung

Der Antrieb 1 der entkoppelten Riemenscheibe erfolgt durch einen zentral angeordneten Nabenring 7, der drehfest an einer hier nicht dargestellten Kurbelwelle einer Verbrennungskraftmaschine montierbar ist Der Drehmomentverlauf 4 erfolgt vom Nabenring 7 zum Federelement 5, das aus einem elastomeren Werkstoff besteht und den Nabenring 7 drehelastisch mit der inneren Stützhülse 11 verbindet. Im hier dargestellten Ausführungsbeispiel ist das Federelement 5 mit dem Nabenring 7 und der inneren Stützhülse 11 vulkanisiert.
Drehungleichförmigkeiten der Kurbelwelle, die durch den Nabenring 7 in die entkoppelte Riemenscheibe eingeleitet werden, werden bereits durch das in Umfangsrichtung drehelastische Federelement 5 reduziert.
Von der inneren Stützhülse 11 erstreckt sich der Drehmomentverlauf über die Freilaufkupplung 6, die im hier gezeigten Ausführungsbeispiel als Schlingfederfreilauf 9 ausgebildet ist. Der Schlingfederfreilauf 9 ist dem Federelement 5 in einer funktionstechnischen Reihenschaltung nachgeschaltet, so dass die Drehungleichförmigkeiten durch das Federelement 5 auch vom Schlingfederfreilauf 9 weitgehend ferngehalten werden.
Der Schlingfederfreilauf 9 ist in radialer Richtung zwischen der inneren Stützhülse 11 und dem radial inneren Axialvorsprung 12 angeordnet, wobei der Einbauraum, in dem der Schlingfederfreilauf 9 eingebaut ist, mit Fett gefüllt und durch die Dichtringe 15, 16 gegenüber der Umgebung abgedichtet ist.
Wenn der der Schlingfederfreilauf 9 entgegen der Freilaufrichtung sperrt, wird Drehmoment über den Schlingfederfreilauf 9 auf den Riemenscheibenkörper 8 übertragen, der den Abtrieb 2 bildet. Der Riemenscheibenkörper 8 kann ein hier nicht dargestelltes Nebenaggregat einer Verbrennungskraftmaschine mittels eines Riemens antreiben.

Um eine gute Führung der relativ zueinander verdrehbaren Bauteile zu bewirken, hat die innere Stützhülse 11 einen sich in radialer Richtung nach außen erstreckenden Stützbund 17, an den sich der Radialvorsprung 14 des Riemenscheibenkörpers 8 mittels des Axialgleitlagers 18 anlegt.

Auf der dem Radialvorsprung 14 axial abgewandten Stirnseite des Riemenscheibenkörpers 8 ist ein Schwungring 21 angeordnet, der durch den Federkörper 20 mit dem Führungsflansch 19 verbunden ist. Der Führungsflansch 19 ist im Hohlraum des C-förmig ausgebildeten Riemenscheibenkörpers 8 angeordnet und innerhalb des Hohlraums in radialer und axialer Richtung geführt. Diese Führung erfolgt mittels des Lagers 22, das durch ein L-förmiges Gleitlager 23 gebildet ist, wobei das Gleitlager 23 durch die Elastomerspur 24 mit dem Innenumfang des radial äußeren Axialvorsprungs 13 verbunden ist.
Die Führung des Schwungrings 21 in axialer Richtung erfolgt durch den Radialvorsprung 14 und das Gleitlager 23, das den Radialvorsprung 14 in radialer Richtung zumindest teilweise überdeckt.

## Patentansprüche

1. Entkoppelte Riemenscheibe, umfassend einen Antrieb (1) und einen Abtrieb (2), wobei zwischen dem Antrieb (1) und dem Abtrieb (2) eine Entkoppiungsvorrichtung (3) zur Entkopplung von Drehschwingungen angeordnet ist, wobei die Entkopplungsvorrichtung (3) in Richtung des Drehmomentverlaufs (4) zunächst ein Federelement (5) und dann eine Freilaufkupplung (6) umfasst, die in einer funktionstechnischen Reihenschaltung angeordnet sind, **dadurch gekennzeichnet, dass** der Antrieb (1) durch einen Nabenring (7) gebildet ist, der drehfest an einer Kurbelwelle einer Verbrennungskraftmaschine montierbar ist und der Abtrieb (2) durch einen Riemenscheibenkörper (8), durch den ein Nebenaggregat der Verbrennungskraftmaschine antreibbar ist.

2. Riemenscheibe nach Anspruch 1, **dadurch gekennzeichnet, dass** die Freilaufkupplung (6) durch einen Schlingfederfreilauf (9) gebildet ist.

3. Riemenscheibe nach Anspruch 2, **dadurch gekennzeichnet, dass** der Schlingfederfreilauf (9) das Federelement (5) mit radialem Abstand umschließt und dass in dem durch den Abstand gebildeten Spalt (10) eine innere Sfiützhülse (11) angeordnet ist.

4. Riemenscheibe nach einem der Ansprüche 1 bis 3, **dadurch gekennzeichnet, dass** das Federelement (5) aus einem elastomeren Werkstoff besteht.

5. Riemenscheibe nach einem der Ansprüche 1 bis 4, **dadurch gekennzeichnet, dass** das Federelement (5) und die innere Stützhülse (11) stoffschlüssig miteinander verbunden sind.

6. Riemenscheibe nach einem der Ansprüche 1 bis 5, **dadurch gekennzeichnet, dass** der Riemenscheibenkörper (8) C-förmig in axialer Richtung offen ausgebildet ist, mit einem radial inneren (12) und einem radial äußeren Axialvorsprung (13), die stirnseitig einerseits durch einen Radialvorsprung (14) miteinander verbunden sind.

7. Riemenscheibe nach einem der Ansprüche 2 bis 6, **dadurch gekennzeichnet, dass** der Schlingfederfreilauf (9) axial beiderseits durch jeweils einen Dichtring (15, 16) abgedichtet ist, wobei die Dichtringe (15, 16) radial zwischen der inneren Stützhülse (11) und dem inneren Axialvorsprung (12) angeordnet sind.

8. Riemenscheibe nach einem der Ansprüche 1 bis 7, **dadurch gekennzeichnet, dass** die innere Stützhülse (11) stirnseitig einerseits einen sich radial nach außen erstreckenden Stützbund (17) aufweist, der den Radialvorsprung (14) anliegend berührt.

9. Riemenscheibe nach Anspruch 8, **dadurch gekennzeichnet, dass** der Radialvorsprung (14) den Stützbund (17) mittels eines Axialgleitlagers (18) anliegend berührt.

10. Riemenscheibe nach einem der Ansprüche 1 bis 9, **dadurch gekennzeichnet, dass** in radialer Richtung zwischen dem inneren (12) und dem äußeren Axialvorsprung (13) ein Führungsflansch (19) angeordnet ist, der mittels eines Federkörpers (20) mit einem Schwungring (21) verbunden ist.

11. Riemenscheibe nach Anspruch 10, **dadurch gekennzeichnet, dass** der Federkörper (20) aus einem elastomeren Werkstoff besteht.

12. Riemenscheibe nach Anspruch 10, **dadurch gekennzeichnet, dass** der Führungsflansch (19) mittels eines Lagers (22) in radialer und/oder axialer Richtung an einem der Axialvorsprünge (12, 13) und/oder dem Radialvorsprung (14) abgestützt ist.

13. Riemenscheibe nach Anspruch 12, **dadurch gekennzeichnet, dass** das Lager (22) ein im Wesentlichen L-förmiges Gleitlager (23) ist.

14. Riemenscheibe nach Anspruch 13, **dadurch gekennzeichnet, dass** das Gleitlager (23) mittels einer Elastomerspur (24) am Innenumfang (25) des äußeren Axialvorsprungs (13) festgelegt ist und den Radialvorsprung (14) unmittelbar anliegend berührt.
